# EUROPÄISCHE PATENTSCHRIFT

(11) **EP 2 594 916 B1**
(45) Veröffentlichungstag und Bekanntmachung des Hinweises auf die Patenterteilung: **16.07.2014**
(21) Anmeldenummer: 11009196.4
(22) Anmeldetag: 21.11.2011
(51) Int. Cl.: G01L 5/28, G01M 17/007

(54) **Rollenprüfstand und Verfahren zum Betrieb eines Rollenprüfstandes**
Roll test stand and method for operating same
Etat de contrôle de rouleaux et procédé de fonctionnement d'un état de contrôle de rouleaux

(43) Veröffentlichungstag der Anmeldung: 22.05.2013
(73) Patentinhaber: Sherpa Autodiagnostik GmbH, 84453 Mühldorf (DE)
(72) Erfinder: Rischke, Manfred, 87787 Dietratried (DE)
(74) Vertreter: Manitz, Finsterwald & Partner GbR

(56) Entgegenhaltungen:
- DE-A1- 2 518 850
- DE-A1- 19 841 944
- DE-C1- 19 635 194

## Beschreibung

Die vorliegende Erfindung betrifft einen Rollenprüfstand mit mindestens einem Rollenpaar zur Prüfung der Radbremsen eines Fahrzeugs, vorzugsweise mit ersten und zweiten Rollenpaaren zur Prüfung der Radbremsen einer Achse eines Fahrzeugs, wobei dem bzw. jedem Rollenpaar ein jeweiliger Antrieb zugeordnet ist, der mindestens eine der Rollen des Paares in einer vorgegebenen Drehrichtung und vorzugsweise beide Rollen in der gleichen Drehrichtung zu drehen vermag. Ferner betrifft die Erfindung ein Verfahren zum Betrieb eines Rollenprüfstandes der eingangs genannten Art, wobei, nachdem das Fahrzeug auf den Rollenprüfstand gefahren ist, mindestens eine Rolle eines Rollenpaares bzw. beider Rollenpaare angetrieben wird und durch einen Bremsvorgang des Fahrzeugs die Bremswirkung durch die auf die Rollen übertragenem Kräften ermittelt wird.

Solche Rollenprüfstände und Verfahren sind seit langem bekannt. Die Anwesenheit eines Fahrzeugs auf dem Prüfstand wird ermittelt und der Rollenantrieb wird eingeschaltet. Dies kann dadurch erfolgen, dass ein Rad des Fahrzeugs auf eine Tastrolle druckt, die sich in der Mulde zwischen den Rollen eines Rollenpaares befindet und erzeugt ein entsprechendes Signal durch das, der Antrieb für das Rollenpaar eingeschaltet wird. Die Rollen werden durch den Antrieb auf eine vorgegebene Geschwindigkeit gebracht, wobei die Räder des Fahrzeugs mit einer entsprechenden Geschwindigkeit gedreht werden. Der Prüfvorgang wird dann durch den Fahrer bzw. den Prüfer ausgelöst in dem er auf die Bremse druckt. Die Bremswerte für das geprüfte Rad oder die geprüfte Radbremsen werden ermittelt. Durch die Betätigung der Bremsen wird die Drehgeschwindigkeit der Rollen herabgesetzt und der Antrieb für die Rollen wird ausgeschaltet. Nach einem Prüfvorgang werden die Rollen meist nach einer kurzen Pause von einigen Sekunden zwecks Durchführung einer erneuten Bremsprüfung wieder angetrieben, da die Bremsprüfung üblicherweise einige Male wiederholt wird, um verlässliche Bremswerte zu erhalten.

Obwohl Rollenprüfstände und Verfahren dieser Art seit vielen Jahren bekannt sind, ist es immer etwas problematisch gewesen, das Fahrzeug aus dem Rollenprüfstand herauszufahren, da das geprüfte Rad bzw. die geprüften Räder befinden sich in jeweilige Mulden, die zwischen den Rollen eines jeden Rollenpaares gebildet sind. Bei einem Motorrad befindet sich das Vorderrad oder das Hinterrad in der Mulde zwischen den beiden Rollen eines Rollenpaares. Bei einem Fahrzeug wie ein PKW oder LKW befinden sich die Vorderräder der Vorderachse oder die Hinterräder der Hinterachse oder die Räder einer anderen Achse in den entsprechenden Mulden der beiden Rollenpaare.

Egal welche Art von Fahrzeug geprüft wird ist der Fahrer ist angehalten, das Fahrzeug erst dann aus dem Rollenprüfstand herauszufahren, wenn die Rollen in den Pausen zwischen den Antriebsphasen zumindest im Wesentlichen frei drehbar sind. Dann können die Räder leicht durchdrehen, da die Rollen eben zumindest im Wesentlichen frei drehbar sind. Wenn beispielsweise das vordere Rad bzw. die vorderen Räder geprüft wird bzw. werden und das hintere Rad bzw. die hinteren Räder vom Antriebsmotor des Fahrzeugs angetrieben wird bzw. werden, so kann das Fahrzeug durch den eigenen Antrieb nach vorne aus dem Prüfstand geschoben werden. Verfügt das Fahrzeug über Vorderradantrieb, kann das Fahrzeug bei der Prüfung der Hinterachsbremsen durch den eigenen Antrieb aus dem Rollenprüfstand herausgezogen werden.

Es versteht sich, dass das Problem der frei drehenden Rollen im erst genannten Beispiel des Hinterradantriebs bei der Prüfung der Hinterachse und umgekehrt bei Vorderradantrieb bei der Prüfung der Vorderachse sich besonders bemerkbar macht. Bei dem Verlassen des Rollenprüfstandes muss mit etwas höhere Drehgeschwindigkeit des Rades bzw. der Räder versucht werden das Fahrzeug aus dem Rollenpaar bzw. den Rollenpaaren zu fahren.

Bei Fahrzeugen mit Allradantrieb ist das Problem nicht so ausgeprägt egal ob die Bremsen der Vorderachse oder der Hinterachse geprüft werden, da meistens die nicht geprüfte Achse über ausreichenden Antrieb verfügt, um das Verlassen des Prüfstandes zu erleichtern, es sei denn, dass die Auslegung des Allradsystems besondere Schlupfzustände beinhaltet, die den notwendigen Vortrieb entgegenwirken.

Das Problem des Herausfahrens aus einem Rollenprüfstand ist bei manchen Fahrzeugarten extrem ausgeprägt, und bei einigen Fahrzeugen ist das Herausfahren unter Umständen gar unmöglich. Zum Beispiel sind PKWs mit Hinterradantrieb bekannt, die mit einer elektronischen Schlupfregelung bzw. ESP-System ausgestattet sind, die bzw. das nur einen gewissen Schlupf zwischen den beiden hinteren Rädern zulässt und beispielsweise das Antriebsmoment auf das eine Hinterrad drosselt, wenn das andere Hinterrad durchdreht. Eine derartige Schlupfregelung soll das unerwünschte Rutschen oder Drehen des Fahrzeugs im normalen Fahrbetrieb auf z.B. einer verreisten Straße verhindern.

Wenn nun die Bremsen der Hinterachse geprüft werden, kann diese Schlupfregelung dazu führen, dass wenn eine der Hinterräder auf die frei drehbaren Rollen des einen Rollenpaares durchdreht auch das andere Hinterrad keine genügende Antriebskraft entwickeln kann um das Fahrzeug überhaupt aus dem Rollenprüfstand fahren zu können. Zwar verfügen manche Fahrzeuge über die Möglichkeit diese Schlupfregelung ausschalten zu können, es gibt aber durchaus Fahrzeuge, bei denen dies nicht möglich ist.

Die oben geschilderte Problematik kann genauso vorkommen mit einem Fahrzeug mit Vorderradantrieb wenn die Vorderräder sich auf dem Rollenprüfstand stehen.

Wenn der Prüfer bzw. der Fahrer versucht während einer Antriebsphase der Rollen das Prüfstand mittels des Fahrzeug eigenen Antriebs zu verlassen, kann dies auch zu rückartigen Bewegungen des Fahrzeugs führen, da der Antrieb der Rollen einen höheren Schub durch das Antriebssystem des Fahrzeugs erfordern um dieses aus dem Rollenprüfstand heraus zu bewegen.

Um die Problematik des Herausfahrens aus einem Rollenprüfstand zu beheben, ist es bekannt, eine Feststellbremse nach Art einer Scheibenbremse vorzusehen, die auf der Antriebsachse des Rollenmotors wirkt und in den Pausen zwischen wiederhöhlten Bremsprüfungen die Rollen festhalten. Solche Scheibenbremsen sind aber sehr aufwendig.

Auch ist, wie in DE 19841944 offenbart, das Absenken der Rollen bekannt, was ebenfalls mechanisch aufwendig ist.

Die Aufgabe der vorliegenden Erfindung besteht darin die oben geschilderte Problematik ohne der Anwendung von Scheibenbremsen zu lösen und das Herausfahren eines Fahrzeugs aus einem Rollenprüfstand zu erleichtern.

Um diese Aufgabe zu lösen, wird bei einem Rollenprüfstand der eingangs genannten Art erfindungsgemäß vorgesehen, dass eine Umkehreinrichtung vorgesehen ist, die bei der Ausfahrt des Fahrzeugs aus dem Rollenprüfstand die Drehrichtung mindestens einer der Rollen umkehrt. Das erfindungsgemäße Verfahren zeichnet sich dadurch aus, dass zur Erleichterung des Fahrens aus dem Prüfstand die Drehrichtung der Rollen im Vergleich zum Bremsprüfvorgang umgekehrt wird.

Hierdurch wird überraschend und auf raffinierte Weise das Problem des Herausfahrens aus dem Rollenprüfstand ohne großen Aufwand vollkommen gelöst, auch bei Fahrzeugen mit Schlupfregelung. Diese Lösung ist auch überraschend, weil man meinen könnte, dass die Umkehrung der Drehrichtung normalerweise die Drehrichtung der Räder umkehren und das Fahrzeug rückwärts aus dem Rollenprüfstand hinausschieben würde. In der Tat funktioniert die Umkehrung der Drehrichtung der Rolle noch besser als eine Feststellung der Rollen mittels der erwähnten Scheibenbremsen. Ferner kann die erfindungsgemäße Lösung wesentlich preisgünstiger realisiert werden und macht das Herausfahren aus dem Prüfstand recht einfach, so dass es bei allen Fahrzeugen im Wesentlichen ruckfrei vonstattengeht.

Die Erklärung ist darin zu finden, dass die Drehrichtungsumkehr einen erhöhten Drehwiderstand für das entsprechende Rad bzw. die entsprechenden Räder bietet und die höhere Drehgeschwindigkeit der Räder, die durch den Antrieb des Fahrzeugmotors erreicht wird eine vorwärts gerichtet Geschwindigkeit entsprechen die durchaus größer ist als die Rückwärtsgeschwindigkeit, die aufgrund der umgekehrten Drehrichtung der Rollen durch den Rollenantrieb zu erwarten wäre.

Es soll erwähnt werden, dass die erfindungsgemäße Lösung nicht nur wirksam ist wenn vorschriftsmäßig versucht wird, das Fahrzeug aus den Rollen in den genannten Pausen herauszufahren, sondern auch dann wenn die Rollen für eine erneute Bremsprüfung wieder angetrieben werden. Die Umkehr der Drehrichtung durch die Umpolung der elektrischen Antriebsquelle für einen Elektromotor ist auch bei eine bereits stattfindende Drehung des Rollenantriebs in der anderen Richtung durchaus möglich und führt auch zunächst zu einem Abbremsen der Drehung in der einen Richtung vor das Drehen des Antriebs in die andere Drehrichtung anfängt.

Die erfindungsgemäße Lösung ist bei Rollenprüfständen, die von beiden Seiten angefahren werden, besonders einfach zu realisieren, da eine Einrichtung zur Drehrichtungsumkehr dann ohnehin vorhanden sein muss da die Drehrichtung der Rollen umgekehrt werden muss je nachdem, ob das Fahrzeug den Rollenprüfstand von der einen oder der anderen Seite anfährt.

Diese dann bereits vorhandene Einrichtung zur Drehrichtungsumkehr kann nun zu dem erfindungsgemäßen Zweck mittels einer geeigneten Steuerung ausgenützt werden. Der gleiche Vorteil gilt für Rollenprüfstände, die entsprechend der Lehre der s der EP-B-1931957 ausgelegt sind, um zu prüfen, ob es sich bei dem Fahrzeug, um ein solches mit Allradantrieb handelt, da auch hier beide Drehrichtungen erforderlich sind.

Besonders günstig ist es, wenn eine Ermittlungseinrichtung vorgesehen ist, die automatisch ermittelt, ob das Fahrzeug aus dem Rollenprüfstand zu fahren versucht.

Hiermit geht das Herausfahren aus dem Rollenprüfstand vollständig automatisch, der Fahrer braucht lediglich den Gang einzuschalten oder zu versuchen, ein Fahrzeug mit Automatikgetriebe vorwärts zu fahren, um mittels der automatischen Drehrichtungsumkehr Unterstützung bei dem Verlassen des Prüfstandes zu erhalten.

Die automatische Ermittlungseinrichtung kann in verschiedenen Ausführungen realisiert werden. Beispielsweise kann sie die Bewegung einer Tastrolle ermitteln, die zwischen den Rollen des Rollenpaares angeordnet ist. Solche Tastrollen sind ohnehin bei Rollenprüfständen vorhanden und werden normalerweise durch das Vorderrad oder die Vorderräder nach unten gedrückt, wenn das Fahrzeug auf den Rollenprüfstand gefahren wird und lösen so das Einschalten des Antriebs für die Rollen aus, beispielsweise mittels eines von einem Hebel betätigten Schalters. Die Drehzahl der Tastrollen wird ferner häufig ermittelt, um die Steuerung des Rollenprüfstandes im Sinne des wiederholten Antreibens der Rollen für erneute Bremsprüfungen und des Auslösens der Pausen zwischen aufeinanderfolgenden Antriebsphasen zwischen den einzelnen Bremsprüfungen.

Bei dem Bremsprüfvorgang werden die Räder des Fahrzeugs von den Rollen angetrieben und treiben selbst die Tastrolle an. Diese liefert somit ein Istwert für die momentane Drehgeschwindigkeit der Räder auf den Rollen eines Rollenpaares und dieser Istwert kann für Steuerungszwecken ausgenützt werden. Wenn das Fahrzeug versucht, aus dem Prüfstand herauszufahren, ändert sich die Drehgeschwindigkeit der Tastrolle und dies kann für die Ermittlung herangezogen werden. Wenn beispielsweise die Tastrolle durch die Räder des Fahrzeugs schneller gedreht wird als für die Bremsprüfung vorgesehen ist, ist dies ein sicheres Anzeichen dafür, dass das Fahrzeug versucht den Prüfstand zu verlassen. Eine solche schnellere Drehung der Tastrolle kann stattfinden wenn die Rollen in den genannten Pausen frei drehbar sind oder während sie in der Richtung drehen, die für eine (erneute) Bremsprüfung vorgesehen ist. Es wird üblicherweise eine Tastrolle für jedes Rollenpaar vorgesehen. Wenn nur die eine Tastrolle schneller dreht als von den Rollen zu erwarten ist, ist dies immer noch ein Indiz, dass das Fahrzeug aus dem Rollenprüfstand gefahren werden soll und es reicht das Signal von einer der beiden Tastrollen, um die Drehrichtungsumkehr zu bewerkstelligen.

Eine weitere Möglichkeit besteht darin, dass die Ermittlungseinrichtung eine Änderung der Drehgeschwindigkeit der Rollen der Rollenpaare ermittelt. Dies kann relativ einfach dadurch erfolgen, dass die Ermittlungseinrichtung durch eine Lichtschranke oder einen Näherungssensor oder einen magnetischen oder kapazitiven Geber gebildet ist, die die Drehgeschwindigkeit mindestens einer der Rollen oder eines sich mit einer der Rollen drehenden Kettenrades oder die Umlaufbewegung einer die Kettenräder an den beiden Rollen des Rollenpaares verbindenden Kette ermitteln.

Ferner kann die Ermittlungseinrichtung eine Drehgeschwindigkeitsänderung der Rollen aus Signalen ermitteln, die in einem den Rollen eines Rollenpaares zugeordneten Antriebsmotor entstehen. Dies ist besonders günstig, da kaum zusätzliche Teile erforderlich sind, sondern nur eine Auswertung der ohnehin vorhandenen Signale durch eine entsprechende Programmierung der ohnehin vorhandenen Steuerung des Rollenprüfstandes bzw. eines darin enthaltenen Mikroprozessors oder Rechners.

Für gewöhnlich handelt es sich bei dem Antriebsmotor oder bei jedem Antriebsmotor um einen Elektromotor und bei den Signalen um auf den Motorstrom durch den Antrieb der Rollen durch die Fahrzeugräder aufmodulierte Signale. Dies ist allerdings nicht zwingend erforderlich. Beispielsweise könnte ein hydraulischer Antrieb für die Rollen anstelle eines elektrischen Antriebs vorgesehen werden. Es könnte sich dann bei den Signalen um Druckwerte, um Strömungsgeschwindigkeiten oder Geräusche handeln, die von der Hydraulik erzeugt werden, beispielsweise durch die Strömungsgeschwindigkeiten des verwendeten Hydraulikfluids.

Darüber hinaus besteht auch die Möglichkeit, einen Signalgeber vorzusehen, der automatisch oder durch manuelle Eingabe die Umkehreinrichtung veranlasst, die Drehrichtung der Rollen umzukehren, wenn das Fahrzeug aus dem Rollenprüfstand fahren soll.

Besonders günstig ist es, wenn es sich bei dem bzw. jedem Antrieb um einen Drehstrommotor handelt, und die Umkehreinrichtung den Drehstrommotor bzw. die Drehstrommotoren elektrisch umschaltet, um die Drehrichtung umzukehren. Diese elektrische Lösung lässt sich problemlos und preisgünstig realisieren, da die die Umkehreinrichtung lediglich zum Umschalten von zwei der drei Phasen ausgelegt ist. Diese Lösung kann mit preisgünstig erhältlichen Schützen realisiert werden.

Besonders bevorzugte Ausbildungen des erfindungsgemäßen Rollenpaares und des erfindungsgemäßen Verfahrens ergeben sich aus den weiteren Patentansprüchen.

Wenn in der bisherigen Beschreibung auf das Vorderrad bzw. auf die Vorderräder des Fahrzeugs abgestellt wurde, wird das Fahrzeug normalerweise nach Prüfung der Bremse bzw. Bremsen der Vorderachse weitergefahren, um anschließend die Radbremse bzw. die Radbremsen einer nachfolgenden Achse, beispielsweise der Hinterachse, zu prüfen. Auch dann leistet die vorliegende Erfindung genauso Hilfe bei dem Herausfahren aus dem Rollenprüfstand.

Die Erfindung wird nachfolgend näher erläutert anhand von Ausführungsbeispielen unter Bezugnahme auf die Zeichnung in welcher zeigen:
- Fig. 1: Eine Draufsicht auf ein Kraftfahrzeug in Form eines PKWs mit zwei angetriebenen Achsen, d.h. mit Allradantrieb, wobei nur die wesentliche Komponente des Antriebssystems gezeigt sind,
- Fig. 2: eine Draufsicht von oben auf einen Rollenprüfstand mit zwei Paaren von angetriebenen Rollen für die Räder einer Achse eines Kraftfahrzeugs,
- Fig. 3: eine Querschnittszeichnung entsprechend dem Pfeil III-III der Fig. 2, jedoch zu einem größeren Maßstab, um die Arbeitsweise des Rollenprüfstands näher zu erläutern und
- Fig. 4: Ein Blockschaltdiagram zur Erläuterung der Arbeitsweise des erfindungsgemäßen Rollenprüfstands bzw. dessen Auslegung.

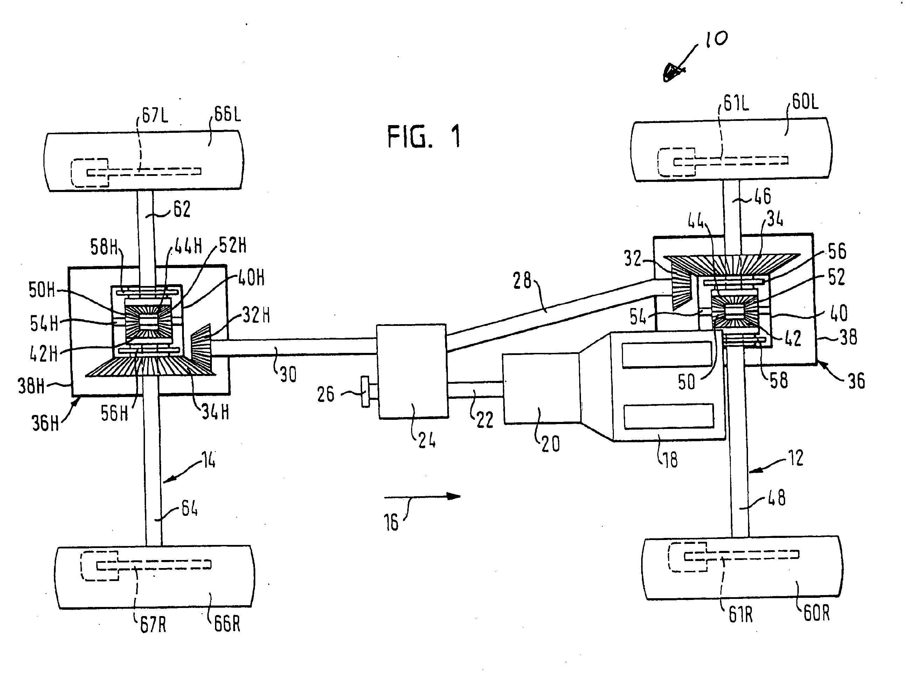

Auch wenn die vorliegende Erfindung keineswegs nur mit allradgetriebenen Fahrzeugen anzuwenden ist, sondern mit allerlei Kraftfahrzeuge einschließlich Motorräder verwendet werden kann, wird hier die wesentlichen Komponenten eines Allradsystems in Fig. 1 gezeigt. Danach verfügt das Fahrzeug 10 über eine vordere Achse 12 und eine hintere Achse 14, wobei der Pfeil 16 die normale Fahrtrichtung angibt. Der Motor 18 des Fahrzeugs ist mit einem Getriebe 20 versehen, dessen Ausgangswelle, die eine übliche Kardanwelle 22 sein kann, die Eingangswelle eines so genannten Verteilergetriebes 24 ist. Das Verteilergetriebe weist drei Ausgangswellen 26, 28 und 30 auf.

Die Ausgangswelle 26, die nur wahlweise vorhanden ist, kann verwendet werden, um Hilfseinrichtungen des Fahrzeugs anzutreiben, beispielsweise eine oder mehrere Pumpen, um Drucköl für hydraulisch betätigte Sperrkupplungen zu betätigen oder eine wahlweise vorhandene Winde bei einem Geländefahrzeug.

Die Ausgangswelle 28, die als Kardanwelle vorgesehen ist, treibt das Antriebsritzel 32 und dieses das Tellerrad 34 des Ausgleichsgetriebes 36 der Vorderachse 12 an. Das Ausgleichsgetriebe 36 weist ein Gehäuse 38 auf, in dem das Antriebsritzel 32, das Tellerrad 34 und die üblichen Teile eines Ausgleichsgetriebes untergebracht sind, das hier mit einer selbsttätigen Ausgleichssperre versehen ist. Demnach besteht das Innere des Ausgleichsgetriebes aus einem Ausgleichsgehäuse 40, das vom Tellerrad 34 angetrieben wird und selbst über entsprechende Lager (nicht gezeigt) im Gehäuse 38 drehbar gelagert ist. Innerhalb des Ausgleichsgehäuses befinden sich Antriebskegelräder 42 und 44, die mit jeweiligen Achswellen 46 und 48 der Vorderachse 12 drehfest verbunden sind, sowie so genannte Ausgleichsräder 50 und 52, wobei auch weitere Ausgleichsräder üblicherweise vorgesehen werden, jedoch in der Zeichnung nicht ersichtlich sind. Die Ausgleichsräder sind an Ausgleichsbolzen wie 54 drehbar gelagert.

Im Ausgleichsgehäuse links und rechts der Antriebskegelräder befinden sich Lamellenkupplungen 56, 58, die unter der Einwirkung der Ausgleichsbolzen auf Druckringen (nicht gezeigt) kraftschlüssig in Eingriff gelangen und verhindern, dass die Achswellen 46 und 48 mit deutlich unterschiedlichen Drehzahlen angetrieben werden. Solche Ausgleichsgetriebe mit selbsttätigen Ausgleichssperren sind in vielen Formen und Variationen in der Fachwelt bekannt und müssen hier nicht extra beschrieben werden. Die Achswellen 46 und 48 treiben jeweilige linke und rechte Räder 60L und 60R an sowie die Bremsscheiben 61L und 61R, die innerhalb dieses Räder angeordnet und mit diesen drehfest verbunden sind. D.h. die Bremsscheiben mit den entsprechenden Bremszylindern bilden jeweilige Radbremsen.

Die dritte Ausgangswelle 30 des Verteilergetriebes 24 ist ebenfalls üblicherweise als Kardanwelle ausgeführt und sorgt über das Antriebsritzel 32H und das weitere Ausgangsgetriebe 36H für den Antrieb der hinteren Achse des Fahrzeugs.

Das Ausgleichsgetriebe 36H ist vom Prinzip her identisch mit dem Ausgleichsgetriebe 36 und die entsprechenden Bauteile sind mit entsprechenden Nummern versehen, jedoch nur mit dem Zusatz H, um eine klare Unterscheidung herbeizuführen. Es versteht sich, dass die Funktionsweise des Ausgleichsgetriebes 36H identisch zum Ausgleichsgetriebe 36 ist. Zu der Hinterachse gehören zwei Achswellen 62 und 64, die jeweilige linke und rechte Hinterräder 66L und 66R sowie die entsprechenden Bremsscheiben 67L und 67R antreiben. Die Halbwelle 64 wird vom Antriebskegelrad 42H und die Halbwelle 62 vom Antriebskegelrad 44H angetrieben.

Es soll an dieser Stelle darauf hingewiesen werden, dass die Darstellung gemäß Fig. 1 nur eine von vielen verschiedenen Auslegungen von Kraftfahrzeugen mit mindestens zwei angetriebenen Achsen darstellt. Die vorliegende Erfindung ist aber zur Anwendung mit allen Fahrzeugarten geeignet insbesondere auch mit solchen Fahrzeugen, die mit nur einer angetriebene Achse und mit einer automatische Schlupfregelung ausgestattet sind. Diese Fahrzeugarten umfassen zum Beispiel Fahrzeuge nur mit Vorderradantrieb und Fahrzeugen nur mit Hinterradantrieb, die hier nicht gezeigt werden, da sie bestens bekannt sind.

Weitere Einzelheiten eines Rollenprüfstands zur Bremsprüfung bei einem allradgetriebenen Fahrzeug und zur automatischen Erkennung ob es sich bei dem Fahrzeug, um ein solches mit Allradantrieb handelt, gehen aus der EP-B-1931957 hervor.

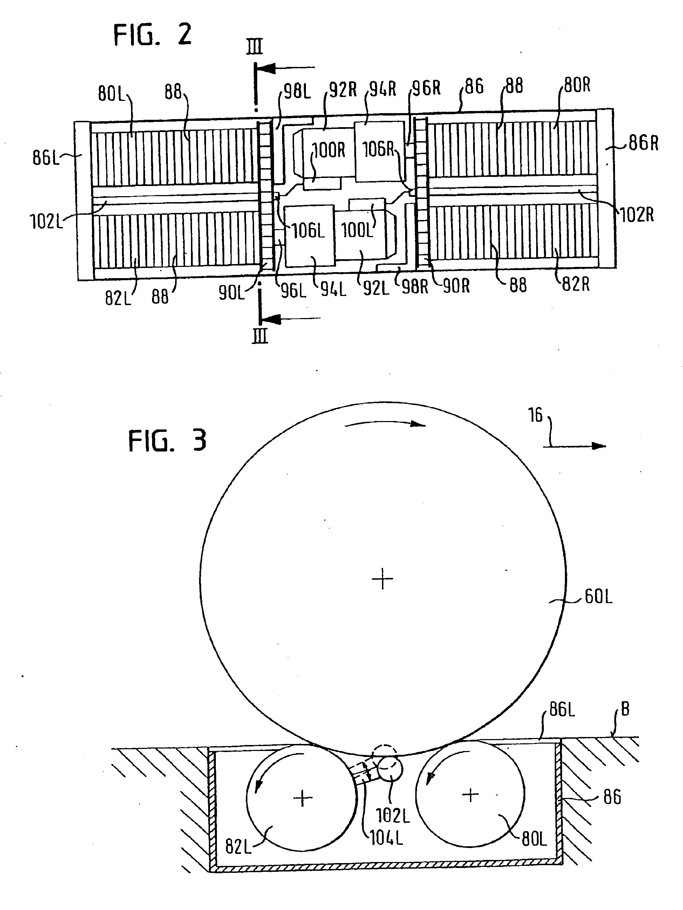

Ein Beispiel eines Prüfstandes mit zwei Rollenpaaren wird nunmehr anhand der Figuren 2 und 3 beschrieben.

Im Prüfstand gemäß Fig. 2 sind zwei Rollenpaare 80R und 82R auf der rechten Seite und 80L und 82L auf der linken Seite vorgesehen, die voneinander vollkommen unabhängig sind. Die beiden Rollenpaare sind in einem quaderförmigen Kasten bzw. Gehäuse 86 untergebracht, wobei das Gehäuse 86 an ihrer oberen Seite im Bereich der Profilwalzenpaare 80R, 82R bzw. 80L, 82L offen ist, jedoch im mittleren Bereich zwischen diesen Rollenpaaren normalerweise mit einem Deckel verschlossen ist (der hier der Darstellung halber fortgelassen ist). Auch sind Deckel häufig vorgesehen, um die Rollenpaare 80R, 82R bzw. 80L, 82L abzudecken, wenn diese nicht für Bremsprüfungen benötigt werden.

An ihrem rechten Ende sind die Rollen 80R und 82R in Lagern abgestützt, die im entsprechenden rechten Ende des Gehäuses 86 untergebracht sind.

Auf der linken Seite sind die entsprechenden Rollen 80L und 82L ebenfalls in Lagern drehbar gelagert. Die Lager auf der rechten Seite des Rollenpaars 80R, 82R und auf der linken Seite der Rollen 80L, 82L sind in der Zeichnung gemäß Fig. 2 nicht ersichtlich, da sie von dem Gehäuseteil 86R und 86L abgedeckt sind.

Wie aus Fig. 3 ersichtlich, sind die Oberflächen der Rollenpaare, hier am Beispiel der Rollenpaare 80L und 82L gezeigt, mit ihren oberen Bereichen flächenbündig mit den Gehäuseteilen 86L bzw. 86R (in Fig. 3 nicht gezeigt) und ebenfalls flächenbündig mit dem Werkstattboden B, in den das Gehäuse 86 eingelassen ist.

Die Oberflächen der Rollenpaare 80R, 82R bzw. 80L und 82L sind mit Aufrauungen, beispielsweise in Form von unregelmäßigen Schweißraupen 88 versehen, um die erforderliche Griffigkeit zwischen den Rollen und dem zu prüfenden Fahrzeugrad sicherzustellen, das schematisch in Fig. 3 mit 60L angedeutet ist.

Die Rollen 80R, 82R bzw. 80L und 82L der beiden Rollenpaare sind an ihren Enden, die benachbart zur Mitte des Gehäuses 86 liegen, jeweils mit einer umlaufenden Kette 90R bzw. 90L drehfest miteinander verbunden. Das rechte Rollenpaar 80R, 82R wird von einem Elektromotor 92L mit Getriebe 94L, d.h. einem Getriebemotor, angetrieben, wobei die Antriebswelle 96L, die die Rolle 80R direkt antreibt, auch für die Lagerung der linken Seite der Rolle 80R sorgt, d.h. die Lagerung der Welle 96L im Getriebe 94L sorgt für die notwendige Lagerung des linken Endes der Rolle 80R. Für das linke Ende der Rolle 82R wird ein getrenntes Lager 98R vorgesehen, das am Gehäuse 86 bzw. am Gehäuserahmen abgestützt ist. Es handelt sich bei dem Elektromotor 92L um einen Elektromotor mit variabler Antriebsgeschwindigkeit, die von einem Elektronikbauteil 100R gesteuert wird. Die Antriebsanordnung für das linke Rollenpaar 80L, 82L ist identisch zum Antriebssystem für das rechte Rollenpaar 80R, 82R aufgebaut, weshalb die entsprechenden Teile mit den gleichen Bezugszeichen versehen werden, jedoch mit dem Zusatz L anstatt von R. Es versteht sich, dass die bisherige Beschreibung auch für diese Teile gilt.

Zwischen jedem Rollenpaar 80R, 82R und 80L, 82L befindet sich eine Tastrolle 102L und 102R, die drehbar an jeweiligen Hebel wie 104L in Fig. 3 angebracht ist. Die Hebel wie 104L sorgen dafür, dass die Antriebsmotoren 92R bzw. 92L erst dann Strom erhalten und die Rollen in Drehung versetzen können, wenn ein Rad wie 60L in Fig. 3 auf die beiden Rollen gefahren ist und der jeweilige Hebel (auch Steuerstange genannt) von der oberen Position in gebrochenen Linien dargestellt, in die nach unten gedrückte Position, die in durchgehenden Linien gezeichnet ist, gedrückt wird. In dieser niedergedrückten Stellung betätigt der jeweilige Hebel, in diesem Fall 104L, einen jeweiligen Endschalter (nicht gezeigt), die ein entsprechendes Signal an die jeweilige Steuerung 100R bzw. 100L gibt.

Die Drehrichtungen der Rollen 80L bzw. 82L, die erforderlich sind, um bei der Bremsprüfung das linke Vorderrad 60L in Fahrtrichtung zu drehen, sind in Fig. 3 durch jeweilige Pfeile dargestellt.

Die Bauteile 80R, 82R, 92R, 94R, 96R, 102R, 100R, 106R bilden eine erste Antriebseinrichtung, die beispielsweise dem rechten Vorderrad 60R zugeordnet werden kann. In der gleichen Weise bilden die Bauteile 80L, 82L, 92L, 94L, 96L, 102L, 100L, 106L eine Antriebseinrichtung für beispielsweise das linke Vorderrad 60L.

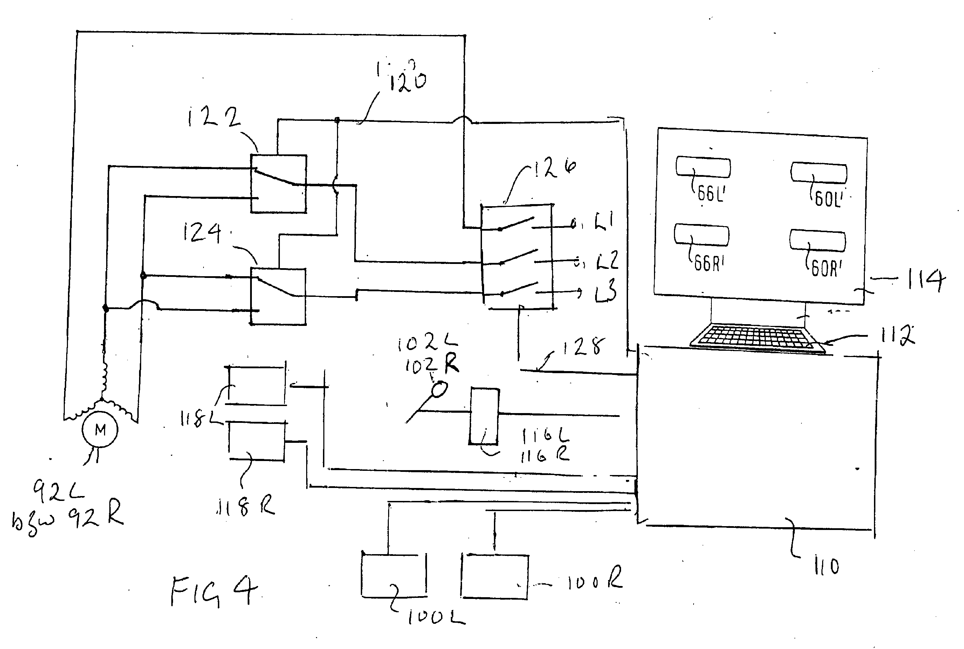

Jede Antriebseinrichtung ist ausgelegt, damit der entsprechende Motor 92R bzw. 92L das entsprechende Rollenpaar 80R, 82R bzw. 80L, 82L mit einer erwünschten Geschwindigkeit antreiben kann, und diese erwünschte Geschwindigkeit kann über eine externe Steuerleitung, beispielsweise von einer übergeordneten Computersteuerung, wie 110 in Fig. 4, vorgegeben werden. In üblicher Weise liegt diese erwünschte Geschwindigkeit im Bereich zwischen 3 und 7m/ s Oberflächengeschwindigkeit der entsprechenden Rollen. Dabei wird für einen LKW die Geschwindigkeit niedriger gewählt als für einen PKW.

Dies ist auch der Zustand bei einem herkömmlichen Bremsenprüfstand beispielsweise beim Bremsenprüfstand BPS Kompakt, 0-13.0 der vorliegenden Anmelderin.

Zu diesen Antriebseinrichtungen gehören auch die Kraftaufnehmer, die die Reaktionskraft zwischen dem Motor 92R bzw. 92L und dem Gehäuse 86 des Bremsenprüfstands aufnehmen. Die Höhe dieser Reaktionskraft hängt vom Rollwiderstand der jeweiligen Räder sowie der/dem durch die Bremsen auf die jeweiligen Räder ausgeübten Bremskraft bzw. -moment ab. Da der Eingangswert bei gelöster Bremse und dem entsprechenden Wert bei betätigter Bremse ermittelt werden, kann der Anteil der Reaktionskraft, der auf die Wirkung der Bremsen zurückzuführen ist, durch den Unterschied der beiden Werte ermittelt werden. So funktioniert auch der Bremsenprüfstand, wenn die Prüfung an einem herkömmlichen Fahrzeug durchgeführt wird, das mit nur einer angetriebenen Achse versehen ist, d.h. ohne Allradantrieb. In diesem Falle ist die erwünschte Geschwindigkeit für beide Räder gleich. Bei einem solchen Fahrzeug hat ein etwaiges Ausgleichsgetriebe mit Sperrwirkung, das sich in der Achse zwischen den beiden Rädern befindet, bei Betätigung der Bremsen keine Auswirkung auf die gemessenen Bremskräfte. Selbst wenn die Räder aus irgendeinem Grund unterschiedliche Rollumfänge haben sollten, reicht dies normalerweise nicht aus, um eine so unterschiedliche Drehgeschwindigkeit der linken und rechten Räder herbeizuführen, dass die Sperrkupplung eingreift. Bei einem Fahrzeug mit mehreren angetriebenen Achsen, die miteinander über ein Antriebssystem starr oder quasi-starr gekoppelt sind, ist dies aber nicht aber nicht der Fall und die Steuerungen 100R und 100L bzw. die von einem übergeordneten Computer (110, Fig. 4) vorgegebenen Steuerparameter werden anders ausgelegt, um eine Verfälschung der Messwerte aufgrund der mechanischen Kopplung der Räder der zwei oder mehr angetriebenen Achsen zu verhindern. Dies ist im Detail in der genannten EP-B-1931957 beschrieben und wird hier nicht unnötig wiederholt.

Bei der vorliegenden Erfindung wird die Tastrolle auch dazu ausgenützt, um zu ermitteln, wenn das Fahrzeug 10 aus dem Rollenprüfstand herausgefahren wird. Um dies zu bewirken legt der Prüfer den ersten Gang des Fahrzeugs ein und versucht vorwärts zu fahren, dabei ändert sich die Drehzahl der Tastrolle.

Die Fig.4 zeigt in höchst schematischer Form wie die erfindungsgemäße Steuerung ausgelegt werden kann. In Fig. 4 ist eine Steuerung in Form eines Rechners 110 gezeigt mit einer Eingabetastatur 112 zur Eingabe von Fahrzeugbezogenen Daten und mit einer Anzeige, hier in Form eines Bildschirms 114, die die erzielte Bremswerte 60L', 60R', 66L' und 66R' für die den einzelnen Rädern 60L, 60R, 66L and 66R zugeordneten Bremsen anzeigt. Die entsprechenden Signale erhält der Rechner 100 von den oben erwähnten Kraftaufnehmern die schematisch mit 118L und 118R angedeutet sind.

Üblicherweise wird auch ein Drucker (nicht gezeigt) an den Rechner 110 angeschlossen, um Messprotokolle auszudrucken. Ferner verfügt der Rechner 110 über einen Datenspeicher (ebenfalls nicht gezeigt) oder eine Verbindung zu einem externen Datenspeicher zur Speicherung der ermittelten Bremswerte und zugeordneten Daten, wie das Autokennzeichen, Automarke, Autotyp und Angaben zum Fahrer und zum zuständigen Prüfer.

Wie in Fig. 4 dargestellt wird die Drehgeschwindigkeit der Tastrolle 102L und der Tastrolle 102R mit entsprechenden Sensoren wie 1116L und 116R ermittelt und an den Rechner bzw. an die Steuerung 110 weitergereicht.

Dort werden die Signale der Sensoren 116L und 116R ausgewertet und sobald eine der beiden Signale auf ein schnelleres Drehen der Rollen, als durch den Antriebsmotor vorgesehen ist, hinweist, wird ein Umschaltsignal vom Rechner 110 über die Steuerleitung 120 an die zwei Schütze 122 und 124 angelegt, die zwei der drei Phasen der Motoren 92L und 92R umschalten (in Fig. 4 ist nur ein Motor M gezeigt), die eine Umsteuerung der Drehrichtung der zugeordneten Elektromotoren 92L und 92R bewirkt. Die Motoren erhalten ihren Strom von den drei Phasen L1, L2 und L3 des Stromnetzes in Fig. 4 über Schalter 126, die auch durch Schütze gebildet sein können, die vom Rechner 110 über eine Steuerleitung 128 ein- und ausgeschaltet werden können.

Durch die schnell erfolgende Drehrichtungsumkehr, bzw die Drehung des bzw. der Elektromotoren in die/der umgekehrte(n) Richtung zu der für die Bremsprüfung vorgesehenen Drehrichtung, wird das Herausfahren des Fahrzeugs aus dem Rollenprüfstand nach erfolgter Bremsprüfung wesentlich erleichtert.

Die Bremsprüfung selbst kann mit dem Rollenprüfstand gemäß Fig. 2 und 3 für ein Fahrzeug mit Vorderradantrieb folgendermaßen ablaufen:
A. Antriebsmotor 92L starten, um das linke Vorderrad 60L in der normalen Fahrtrichtung 16 bei der erwünschten Geschwindigkeit zu drehen und auf diese Geschwindigkeit als Sollwert zu regeln.
B. Gleichzeitig mit Schritt A Antriebsmotor 92R starten, um das rechte Vorderrad 60R bei der erwünschten Geschwindigkeit in normaler Fahrtrichtung zu drehen.
C. Bremsen betätigen und die Bremswerte am linken Rad 60L und am rechten Rad 60R mittels der Kraftaufnehmer 118L und 118R messen und an der Anzeige bzw. auf dem Bildschirm anzeigen.
D. Die sinkende Geschwindigkeit der Rollenpaare während der Bremsprüfung von der Drehgeschwindigkeit der Tastrollen 102L und 102R über die Sensoren 116L und 116R ermitteln, und über den Rechner 110 und mittels des Schalters 126 das Ausschalten der Antriebsmotoren 92L und 92R für einigen Sekunden ausnützen.
E. Bei zufrieden stellenden Bremswerten Bremsprüfung der Vorderachse beenden.
F. Bei unzufrieden stellenden Bremswerten Bremsprüfung abbrechen und Prüflauf fortsetzen und Bremsprüfung an der Vorderachse wiederholen.
G. Wenn die Bremsprüfung für die Vorderachse erfolgreich oder nicht erfolgreich ist, das Fahrzeug verschieben, d.h. die Vorderachse aus den Rollen herausfahren.
H. Der Versuch aus dem Rollenprüfstand herauszufahren mittels der Drehung der Tastrollen 102L und 102R ermitteln und mit Steuerung durch den Rechner die Drehrichtungsumkehr der Motoren 92L, 92R bewirken.
I. Soweit fahren bis die Hinterräder sich in den Mulden zwischen den Rollenpaaren befinden und die Bremsprüfung für die Bremsen der Hinterachse nach dem obigen Schema durchführen,
J. Wenn Bremswerte bei allen vier Bremsen zufriedenstellend sind, positives Messprotokoll ausdrucken, oder
K. Wenn Bremswerte bei mindestens einer der vier Bremsen nicht zufriedenstellend sind, Fehlerprotokoll ausdrucken und
O. Fahrzeug entweder vor oder nach J. und K. aus dem Prüfstand herausfahren, das Fahrzeug wird durch den Vorderradantrieb gezogen, so dass die Hinterräder aus den Mulden zwischen den Rollenpaaren herausrollen.

Bei einem Fahrzeug mit Hinterradantrieb läuft die Bremsprüfung ähnlich ab nur wirkt die Drehrichtungsumkehr hier bei der Prüfung der hinteren Räder, da die Vorderräder nicht angetrieben sind und somit die Hinterräder nicht aus den Mulden zwischen den Rollenpaaren herausziehen können.

Es sind selbstverständlich mehrere Variationen bei diesem Verfahren möglich.

Es ist auch nicht zwingend erforderlich, die Vorderachse vor der Hinterachse zu prüfen.

## Patentansprüche

1. Rollenprüfstand mit mindestens einem Rollenpaar (80R, 82R, 80L, 82L), zur Prüfung der Radbremsen eines Fahrzeugs (10), vorzugsweise mit ersten und zweiten Rollenpaaren zur Prüfung der Radbremsen einer Achse (12; 14) eines Fahrzeugs (10), wobei dem bzw. jedem Rollenpaar ein jeweiliger Antrieb (92L, 94L; 92R, 94R), zugeordnet ist, der mindestens eine der Rollen des Paares in einer vorgegebenen Drehrichtung und vorzugsweise beide Rollen in der gleichen Drehrichtung zu drehen vermag,
**dadurch gekennzeichnet,**
**dass** eine Umkehreinrichtung (110, 122, 124) vorgesehen ist, die für die Ausfahrt des Fahrzeugs aus dem Rollenprüfstand die Drehrichtung mindestens einer der Rollen umkehrt.

2. Rollenprüfstand nach Anspruch 1,
**dadurch gekennzeichnet,**
**dass** eine Ermittlungseinrichtung (102L, 116L, 102R, 116R, 110) vorgesehen ist, die automatisch ermittelt, ob das Fahrzeug aus dem Rollenprüfstand zu fahren versucht.

3. Rollenprüfstand nach Anspruch 2,
**dadurch gekennzeichnet,**
**dass** die Ermittlungseinrichtung (102L, 116L, 102R, 116R, 110) die Bewegung einer Tastrolle (102L, 102R) ermittelt bzw. auswertet, die zwischen den Rollen des Rollenpaares (80R, 82R, 80L, 82L) angeordnet ist.

4. Rollenprüfstand nach Anspruch 2,
**dadurch gekennzeichnet,**
**dass** die Ermittlungseinrichtung die Drehrichtung der Rollen (80R, 82R, 80L, 82L) ermittelt.

5. Rollenprüfstand nach Anspruch 4,
**dadurch gekennzeichnet,**
**dass** die Ermittlungseinrichtung durch eine Lichtschranke oder einen Näherungssensor oder einen magnetischen oder kapazitiven Geber gebildet ist, die die Drehrichtung mindestens einer der Rollen (80R, 82R, 80L, 82L) oder eines sich mit einer der Rollen drehenden Kettenrades oder die Umlaufbewegung einer die Kettenräder an beiden Rollen des Rollenpaares (80R, 82R, 80L, 82L) verbindenden Kette (90R, 90L) ermittelt.

6. Rollenprüfstand nach Anspruch 4,
**dadurch gekennzeichnet,**
**dass** die Ermittlungseinrichtung eine Drehgeschwindigkeitsänderung der Rollen aus Signalen ermittelt, die in einem den Rollen eines Rollenpaares (80R, 82R, 80L, 82L) zugeordneten Antriebsmotor entstehen.

7. Rollenprüfstand nach Anspruch 6,
**dadurch gekennzeichnet,**
**dass** es sich bei dem Antriebsmotor oder bei jedem Antriebsmotor um einen Elektromotor handelt, und dass es sich bei den Signalen um auf den Motorstrom durch den Antrieb der Rollen (80R, 82R, 80L, 82L) durch die Fahrzeugräder aufmodulierte Signale handelt.

8. Rollenprüfstand nach Anspruch 1,
**dadurch gekennzeichnet,**
**dass** ein Signalgeber vorgesehen ist, der automatisch oder durch manuelle Eingabe die Umkehreinrichtung veranlasst, die Drehrichtung der Rollen (80R, 82R, 80L, 82L) umzukehren, wenn das Fahrzeug aus dem Rollenprüfstand fährt.

9. Rollenprüfstand nach einem der vorhergehenden Ansprüchen,
**dadurch gekennzeichnet,**
**dass** es sich bei dem bzw. jedem Antrieb um einen Elektromotor (92L, 92R) handelt, und die Umkehreinrichtung den Elektromotor bzw. die Elektromotoren elektrisch umschaltet, um die Drehrichtung umzukehren.

10. Rollenprüfstand nach Anspruch 9,
**dadurch gekennzeichnet,**
**dass** es sich bei dem Antrieb oder jedem Antrieb um einen Drehstrommotor handelt und die Umkehreinrichtung zum Umschalten von zwei (L2, L3) der drei Phasen (L1, L2 und L3) ausgelegt ist.

11. Verfahren zum Betrieb eines Rollenprüfstandes mit mindestens einem Rollenpaar zur Prüfung einer Radbremse eines Fahrzeugs, vorzugsweise mit ersten und zweiten Rollenpaaren (80R, 82R, 80L, 82L) zur Prüfung der Radbremsen einer Achse (12, 14) eines Fahrzeugs, wobei dem bzw. jedem Rollenpaar ein jeweiliger Antrieb zugeordnet ist, der mindestens eine der Rollen des Paares in einer vorgegebenen Drehrichtung und vorzugsweise beide Rollen in der gleichen Drehrichtung zu drehen vermag, wobei, nachdem das Fahrzeug auf den Rollenprüfstand gefahren ist, mindestens eine Rolle eines Rollenpaares bzw. beider Rollenpaare angetrieben wird, und durch einen Bremsvorgang des Fahrzeugs die Bremswirkung auf den Rollen ermittelt wird, und nach erfolgter Prüfung das Fahrzeug aus dem Rollenprüfstand gefahren wird,
**dadurch gekennzeichnet,**
**dass** zur Erleichterung des Fahrens aus dem Prüfstand die Drehrichtung der Rollen (80R, 82R, 80L, 82L) im Vergleich zum Bremsprüfvorgang umgekehrt wird.

12. Verfahren nach Anspruch 11,
**dadurch gekennzeichnet,**
**dass** der Versuch, das Fahrzeug mit eigenem Antrieb aus dem Rollenprüfstand zu fahren, automatisch ermittelt wird und die Umkehrung der Drehrichtung der Rollen (80R, 82R, 80L, 82L) dann veranlasst wird.

## Claims

1. A roller test stand having at least one roller pair (80R, 82R, 80L, 82L) for testing the wheel brakes of a vehicle (10), preferably having first and second roller pairs for testing the wheel brakes of an axle (12; 14) of a vehicle (10), wherein a respective drive (92L, 94L; 92R, 94R) is associated with the or each roller pair and is able to rotate at least one of the rollers of the pair in a predefined direction of rotation and preferably both rollers in the same direction of rotation,
**characterised in that**
a reversing device (110, 122, 124) is provided which reverses the direction of rotation of at least one of the rollers for the vehicle to drive off the roller test stand.

2. A roller test stand in accordance with claim 1,
**characterised in that**
a determination device (102, 116L, 102R 116R, 110) is provided which automatically determines whether the vehicle is attempting to drive off the roller test stand.

3. A roller test stand in accordance with claim 2,
**characterised in that**
the determination device (102L,. 116L, 102R, 116R, 110) determines and evaluates the movement of a sensing roller (102L, 102R) which is arranged between the rollers of the roller pair (80R, 82R, 80L, 82L).

4. A roller test stand in accordance with claim 2,
**characterised in that**
the determination device determines the direction of rotation of the rollers (80R, 82R, 80L, 82L).

5. A roller test stand in accordance with claim 4,
**characterised in that**
the determination device is formed by a light barrier or by a proximity sensor or by a magnetic or capacitive generator which determines the direction of rotation of at least one of the rollers (80R, 82R, 80L, 82L) or of a sprocket rotating with one of the rollers or which determines the orbital movement of a chain (90R, 90L) connecting the sprockets at both rollers of the roller pair (80R, 82R, 80L, 82L).

6. A roller test stand in accordance with claim 4,
**characterised in that**
the determination device determines a rotational speed change of the rollers from signals which arise in a drive motor associated with the rollers of a roller pair (80R, 82R, 80L, 82L).

7. A roller test stand in accordance with claim 6,
**characterised in that**
the drive motor or each drive motor is an electric motor; and **in that** the signals are signals modulated to the motor current by the drive of the rollers (80R, 82R, 80L, 82L) by the vehicle wheels.

8. A roller test stand in accordance with claim 1,
**characterised in that**
a signal generator is provided which initiates the reversing device automatically or by a manual input to reverse the direction of rotation of the rollers (80R, 82R, 80L, 82L) when the vehicle is driving off the roller test stand.

9. A roller test stand in accordance with any one of the preceding claims,
**characterised in that**
the or each drive is an electric motor (92L, 92R) and the reversing direction switches over the electric motor or electric motors electrically to reverse the direction of rotation.

10. A roller test stand in accordance with claim 9,
**characterised in that**
the drive or each drive is a three-phase motor and the reversing device is designed for switching over two (L2, L3) of the three phases (L1, L2 and L3).

11. A method of operating a roller test stand having at least one roller pair for testing a wheel brake of a vehicle, preferably having first and second roller pairs (80R, 82R, 80L, 82L) for testing the wheel brakes of an axle (12; 14) of a vehicle (10), wherein a respective drive is associated with the or each roller pair and is able to rotate at least one of the rollers of the pair in a predefined direction of rotation and preferably both rollers in the same direction, wherein at least one roller of a roller pair or of both roller pairs is driven after the vehicle is driven onto the roller test stand and the braking action on the rollers is determined by a braking process of the vehicle and the vehicle is driven off the roller test stand after a test has taken place,
**characterised in that**
the direction of rotation of the rollers (80R, 82R, 80L, 82L) is reversed in comparison with the brake testing process to facilitate the driving off the test stand.

12. A method in accordance with claim 11,
**characterised in that**
the attempt to drive the vehicle off the roller test stand under its own power is automatically determined and the reversal of the direction of rotation of the rollers (80R, 82R, 80L, 82L) is then initiated.

## Revendications

1. Poste de contrôle de roulement comprenant au moins une paire de rouleaux (80R, 82R, 80L, 82L) pour contrôler les freins de roues d'un véhicule automobile (10), de préférence avec une première et une seconde paire de rouleaux pour le contrôle des freins de roues d'un essieu (12 ; 14) d'un véhicule automobile (10), dans lequel un entraînement respectif (92L, 94L ; 92R, 94R) est associé à ladite paire ou à chaque paire de rouleaux, qui est en mesure de mettre en rotation l'un au moins des rouleaux de la paire dans un sens de rotation prédéterminé, et de préférence de mettre en rotation les deux rouleaux dans le même sens de rotation,
**caractérisé en ce que**
il est prévu un dispositif d'inversion (110, 122, 124) qui inverse le sens de rotation de l'un au moins des rouleaux pour la sortie du véhicule hors du poste de contrôle de roulement.

2. Poste de contrôle de roulement selon la revendication 1,
**caractérisé en ce qu'**il est prévu un dispositif de détermination (102L, 116L, 102R, 116R, 110) qui détermine automatiquement si le véhicule cherche à sortir hors du poste de contrôle de roulement.

3. Poste de contrôle de roulement selon la revendication 2,
**caractérisé en ce que** le dispositif de détermination (102L, 116L, 102R, 116R, 110) détermine ou évalue le mouvement d'un rouleau palpeur (102L, 102R) qui est agencé entre les rouleaux de la paire de rouleaux (80R, 82R, 80L, 82L).

4. Poste de contrôle de roulement selon la revendication 2,
**caractérisé en ce que** le dispositif de détermination détermine le sens de rotation des rouleaux (80R, 82R, 80L, 82L).

5. Poste de contrôle de roulement selon la revendication 4,
**caractérisé en ce que** le dispositif de détermination est formé par une barrière lumineuse ou par un capteur de proximité ou encore par un capteur magnétique ou capacitif qui détermine le sens de rotation de l'un au moins des rouleaux (80R, 82R, 80L, 82L) ou d'une roue dentée qui tourne avec l'un des rouleaux, ou qui détermine le mouvement de circulation d'une chaîne (90R, 90L) qui relie les roues dentées sur les deux rouleaux de la paire de rouleaux (80R, 82R, 80L, 82L).

6. Poste de contrôle de roulement selon la revendication 4,
**caractérisé en ce que** le dispositif de détermination détermine une variation de vitesse de rotation des rouleaux à partir de signaux qui apparaissent dans un moteur d'entraînement associé aux rouleaux d'une paire de rouleaux (80R, 82R, 80L, 82L).

7. Poste de contrôle de roulement selon la revendication 6,
**caractérisé en ce que** le moteur d'entraînement ou chaque moteur d'entraînement est un moteur électrique, et **en ce que** les signaux sont des signaux modulés en superposition sur le courant moteur par l'entraînement des rouleaux (80R, 82R, 80L, 82L) par les roues du véhicule.

8. Poste de contrôle de roulement selon la revendication 1,
**caractérisé en ce qu'**il est prévu un émetteur de signaux qui amène le dispositif d'inversion, automatiquement ou par intervention manuelle, à inverser le sens de rotation des rouleaux (80R, 82R, 80L, 82L) quand le véhicule sort hors du poste de contrôle de roulement.

9. Poste de contrôle de roulement selon l'une des revendications précédentes,
**caractérisé en ce que** l'entraînement ou chaque entraînement est un moteur électrique (92L, 92R), et le dispositif d'inversion effectue une commutation électrique du moteur électrique ou des moteurs électriques pour inverser le sens de rotation

10. Poste de contrôle de roulement selon la revendication 9,
**caractérisé en ce que** l'entraînement ou chaque entraînement est un moteur à courant triphasé, et le dispositif d'inversion est conçu pour inverser deux (L2, L3) des trois phases (L1, L2 et L3).

11. Procédé pour le fonctionnement d'un poste de contrôle de roulement comprenant au moins une paire de rouleaux pour le contrôle d'un frein de roue d'un véhicule automobile, de préférence avec une première et seconde paire de rouleaux (80R, 82R, 80L, 82L) pour contrôler les freins de roues d'un essieu (12, 14) d'un véhicule automobile, dans lequel un entraînement respectif est associé à ladite paire ou à chaque paire de rouleaux, qui est en mesure de mettre en rotation l'un au moins des rouleaux de la paire dans un sens de rotation prédéterminé, et de préférence les deux rouleaux dans le même sens de rotation, dans lequel, après que le véhicule soit parvenu sur le poste de contrôle de roulement, l'un au moins des rouleaux d'une paire de rouleaux ou des deux paires de rouleaux est entraîné, et on détermine par une action de freinage du véhicule l'effet de freinage sur les rouleaux et, après avoir effectué le contrôle le véhicule est sorti du poste de contrôle de roulement,
**caractérisé en ce que**
pour faciliter la sortie hors du poste de contrôle, on inverse le sens de rotation des rouleaux (80R, 82R, 80L, 82L) par comparaison à l'opération de contrôle des freins.

12. Procédé selon la revendication 11,
**caractérisé en ce que** l'on détermine automatiquement une tentative de faire sortir le véhicule avec son propre entraînement hors du poste de contrôle de roulement, et l'on provoque alors l'inversion du sens de rotation des rouleaux (80R, 82R, 80L, 82L).
